(19) Europäisches Patentamt
European Patent Office
Office européen des brevets

(11) **EP 4 579 579 A1**

(12) **EUROPEAN PATENT APPLICATION**

(43) Date of publication:
**02.07.2025 Bulletin 2025/27**

(21) Application number: **24223355.9**

(22) Date of filing: **27.12.2024**

(51) International Patent Classification (IPC):
*G06T 5/70* (2024.01)    *G06T 5/92* (2024.01)
*G06T 5/94* (2024.01)

(52) Cooperative Patent Classification (CPC):
**G06T 5/90;** G06T 2207/10024

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.12.2023 KR 20230196528**

(71) Applicant: **Samsung Electronics Co., Ltd
Suwon-si, Gyeonggi-do 16677 (KR)**

(72) Inventors:
• **SEO, Geonseok
16678 Suwon-si (KR)**
• **YOO, Jaehyoung
16678 Suwon-si (KR)**
• **KIM, Pilsu
16678 Suwon-si (KR)**
• **CHOI, Jae Seok
16678 Suwon-si (KR)**
• **LEE, Hyong Euk
16678 Suwon-si (KR)**

(74) Representative: **Arnold & Siedsma
Bezuidenhoutseweg 57
2594 AC The Hague (NL)**

(54) **IMPROVING IMAGE QUALITY OF THE OUTPUT OF A QUANTIZED DEEP LEARNING MODEL**

(57)     A processor-implemented method with image restoration includes obtaining an input image, generating a correction image by correcting the input image based on a correction parameter that corrects a pixel value distribution of the input image, generating an output image by inputting the correction image to a quantized image restoration model, and generating an enhanced image by inversely correcting the output image based on an inverse correction parameter corresponding to the correction parameter.

Start

→ 1010

Obtain input image

→ 1020

Generate correction image by converting input image based on conversion parameter for converting pixel value distribution of input image

→ 1030

Obtain output image by inputting correction image to quantized image restoration model

→ 1040

Generate enhanced image by inversely converting output image based on inverse conversion parameter corresponding to conversion parameter

End

**FIG. 10**

EP 4 579 579 A1

# EP 4 579 579 A1

## Description

BACKGROUND

1. Field

The following description relates to a method and device with image restoration.

2. Description of Related Art

A quantization process of a deep learning model may be defined as quantization of a training parameter and a feature map. Typically, it may be known that parameters are zero-mean and the influence thereof on image quality from the perspective of image restoration may be less than a quantization part of the feature map. Accordingly, an image quality difference between an existing floating point model (e.g., a floating point (FP) model) and a quantized model (e.g., an integer (INT) model) may be determined based on quantization of a feature map.

When training a deep learning model for quantization for image restoration, in typical methods, an input image may be used without modification on which a special operation is not performed. In other words, algorithms may be performed for solving quantization in a training parameter or a feature map to be trained rather than solving a problem caused by the input image.

SUMMARY

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

In one or more general aspects, a processor-implemented method with image restoration includes obtaining an input image, generating a correction image by correcting the input image based on a correction parameter that corrects a pixel value distribution of the input image, generating an output image by inputting the correction image to a quantized image restoration model, and generating an enhanced image by inversely correcting the output image based on an inverse correction parameter corresponding to the correction parameter.

Preferably, the generating of the correction image includes generating the correction image by correcting the input image with a first gamma correction value, and the generating of the enhanced image may include generating the enhanced image by inversely correcting the output image with a second gamma correction value.

Preferably, the first gamma correction value and the second gamma correction value have a reciprocal relationship.

Preferably, the generating of the correction image further includes determining the correction parameter corresponding to the input image.

Preferably, the generating of the correction image further includes determining the correction parameter based on illuminance of the input image.

Preferably, the generating of the correction image further includes determining the correction parameter based on a specific task target to which the method of image restoration is used.

Preferably, the input image includes any one or any combination of any two or more of a color filter array (CFA) raw image, an output image, and an intermediate image of an image signal processor (ISP).

Preferably, the generating of the correction image includes obtaining a look-up table (LUT) and generating the correction image corresponding to the input image based on the LUT.

Preferably, the obtaining of the LUT includes generating the LUT corresponding to the input image by inputting the input image to an LUT generative model.

In one or more general aspects, a non-transitory computer-readable storage medium may store instructions that, when executed by one or more processors, configure the one or more processors to perform any one, any combination, or all of operations and/or methods described herein.

In one or more general aspects, an electronic device includes one or more processors configured to obtain an input image, generate a correction image by correcting the input image based on a correction parameter that corrects a pixel value distribution of the input image, generate an output image by inputting the correction image to a quantized image restoration model, and generate an enhanced image by inversely correcting the output image based on an inverse correction parameter corresponding to the correction parameter.

Preferably, the one or more processors is/are configured to, for the generating of the correction image, generate the correction image by correcting the input image with a first gamma correction value, and for the generating of the enhanced image, generate the enhanced image by inversely correcting the output image with a second gamma correction value.

Preferably, the first gamma correction value and the second gamma correction value have a reciprocal relationship.

Preferably, for the generating of the correction image, the one or more processors are/is configured to determine the correction parameter corresponding to the input image.

Preferably, for the generating of the correction image, the one or more processors are/is configured to determine the correction parameter based on illuminance of the input image.

Preferably, for the generating of the correction image, the one or more processors are/is configured to determine the correction parameter based on a specific task target to which a method of image restoration is used.

Preferably, the input image includes any one or any combination of any two or more of a color filter array (CFA) raw image, an output image, and an intermediate image of an image signal processor (ISP).

Preferably, for the generating of the correction image, the one or more processors are/is configured to obtain a look-up table (LUT) and generate the correction image corresponding to the input image based on the LUT.

Preferably, for the obtaining of the LUT, the one or more processors are/is configured to generate the LUT corresponding to the input image by inputting the input image to an LUT generative model.

In one or more general aspects, a processor-implemented method with image restoration includes generating, using a correction parameter, a correction image by modifying pixel values of an input image such that a difference between low pixel values is increased a difference between high pixel values is decreased, generating an output image by inputting the correction image to a quantized image restoration model, and generating an enhanced image by inversely correcting the output image based on an inverse correction parameter corresponding to the correction parameter.

Other features and aspects will be apparent from the following detailed description, the drawings, and the claims.

BRIEF DESCRIPTION OF THE DRAWINGS

FIG. 1A is a diagram illustrating a quantization method according to one or more embodiments.
FIG. 1B is a diagram illustrating a problem that occurs when quantizing an image restoration deep learning model according to a typical technique.
FIG. 2 is diagram illustrating an image restoration method according to one or more embodiments.
FIGS. 3A and 3B are diagrams illustrating gamma correction according to one or more embodiments.
FIG. 4A is a diagram illustrating a change in an input distribution according to gamma correction and a change in a number of allocated bits when quantizing according to one or more embodiments.
FIG. 4B is a non-linear graph obtained through gamma correction when a gamma value is 1/2.2 according to one or more embodiments.
FIG. 5 is a diagram illustrating a method of training an image restoration model, according to one or more embodiments.
FIGS. 6A to 6C are diagrams illustrating a method of determining a correction parameter, according to one or more embodiments.
FIG. 7 is a diagram illustrating an image signal processing method according to one or more embodiments.
FIG. 8 is diagram illustrating a look-up table (LUT) that performs optimal correction for each image according to one or more embodiments.
FIG. 9 is a diagram illustrating an example of using an intermediate feature map as an input image of a correction module according to one or more embodiments.
FIG. 10 is a flowchart illustrating an image restoration method according to one or more embodiments.
FIG. 11 illustrates an example of a configuration of an electronic device according to one or more example embodiments.

Throughout the drawings and the detailed description, unless otherwise described or provided, the same drawing reference numerals will be understood to refer to the same elements, features, and structures. The drawings may not be to scale, and the relative size, proportions, and depiction of elements in the drawings may be exaggerated for clarity, illustration, and convenience.

DETAILED DESCRIPTION

The following detailed description is provided to assist the reader in gaining a comprehensive understanding of the methods, apparatuses, and/or systems described herein. However, various changes, and modifications of the methods, apparatuses, and/or systems described herein will be apparent after an understanding of the disclosure of this application. For example, the sequences within and/or of operations described herein are merely examples, and are not limited to those set forth herein, but may be changed as will be apparent after an understanding of the disclosure of this application, except for sequences within and/or of operations necessarily occurring in a certain order. As another example, the sequences of and/or within operations may be performed in parallel, except for at least a portion of sequences of and/or within operations necessarily occurring in an order, e.g., a certain order. Also, descriptions of features that are known after an understanding of the disclosure of this application may be omitted for increased clarity and conciseness.

Although terms such as "first," "second," and "third", or A, B, (a), (b), and the like may be used herein to describe various members, components, regions, layers, or sections, these members, components, regions, layers, or sections are not to be limited by these terms. Each of these terminologies is not used to define an essence, order, or sequence of corresponding members, components, regions, layers, or sections, for example, but used merely to distinguish the corresponding members, components, regions, layers, or sections from other members, components, regions, layers, or sections. Thus, a first member, component, region, layer, or section referred to in the examples described herein may also be referred to as a second member, component, region, layer, or section without departing from the teachings of the examples.

Throughout the specification, when a component or element is described as "on," "connected to," "coupled to," or "joined to" another component, element, or layer, it may be directly (e.g., in contact with the other component, element, or layer) "on," "connected to," "coupled to," or "joined to" the other component element, or layer, or there may reasonably be one or more other components elements, or layers intervening therebetween. When a component or element is described as "directly on", "directly connected to," "directly coupled to," or "directly joined to" another component element, or layer, there can be no other components, elements, or layers intervening therebetween. Likewise, expressions, for example, "between" and "immediately between" and "adjacent to" and "immediately adjacent to" may also be construed as described in the foregoing.

The terminology used herein is for describing various examples only and is not to be used to limit the disclosure. The articles "a," "an," and "the" are intended to include the plural forms as well, unless the context clearly indicates otherwise. As non-limiting examples, terms "comprise" or "comprises," "include" or "includes," and "have" or "has" specify the presence of stated features, numbers, operations, members, elements, and/or combinations thereof, but do not preclude the presence or addition of one or more other features, numbers, operations, members, elements, and/or combinations thereof, or the alternate presence of an alternative stated features, numbers, operations, members, elements, and/or combinations thereof. Additionally, while one embodiment may set forth such terms "comprise" or "comprises," "include" or "includes," and "have" or "has" specify the presence of stated features, numbers, operations, members, elements, and/or combinations thereof, other embodiments may exist where one or more of the stated features, numbers, operations, members, elements, and/or combinations thereof are not present.

Unless otherwise defined, all terms used herein including technical or scientific terms have the same meaning as commonly understood by one of ordinary skill in the art to which the present disclosure pertains and based on an understanding of the disclosure of the present application. It will be further understood that terms, such as those defined in commonly-used dictionaries, should be interpreted as having a meaning that is consistent with their meaning in the context of the relevant art and the disclosure of the present application, and will not be interpreted in an idealized or overly formal sense unless expressly so defined herein.

As used herein, the term "and/or" includes any one and any combination of any two or more of the associated listed items. The phrases "at least one of A, B, and C", "at least one of A, B, or C", and the like are intended to have disjunctive meanings, and these phrases "at least one of A, B, and C", "at least one of A, B, or C", and the like also include examples where there may be one or more of each of A, B, and/or C (e.g., any combination of one or more of each of A, B, and C), unless the corresponding description and embodiment necessitates such listings (e.g., "at least one of A, B, and C") to be interpreted to have a conjunctive meaning.

The features described herein may be embodied in different forms, and are not to be construed as being limited to the examples described herein. Rather, the examples described herein have been provided merely to illustrate some of the many possible ways of implementing the methods, apparatuses, and/or systems described herein that will be apparent after an understanding of the disclosure of this application. The use of the term "may" herein with respect to an example or embodiment (e.g., as to what an example or embodiment may include or implement) means that at least one example or embodiment exists where such a feature is included or implemented, while all examples are not limited thereto. The use of the terms "example" or "embodiment" herein have a same meaning (e.g., the phrasing "in one example" has a same meaning as "in one embodiment", and "one or more examples" has a same meaning as "in one or more embodiments").

The examples may be implemented as various types of products, such as, for example, a personal computer (PC), a laptop computer, a tablet computer, a smart phone, a television (TV), a smart home appliance, an intelligent vehicle, a kiosk, and/or a wearable device. Hereinafter, examples will be described in detail with reference to the accompanying drawings. In the drawings, like reference numerals are used for like elements.

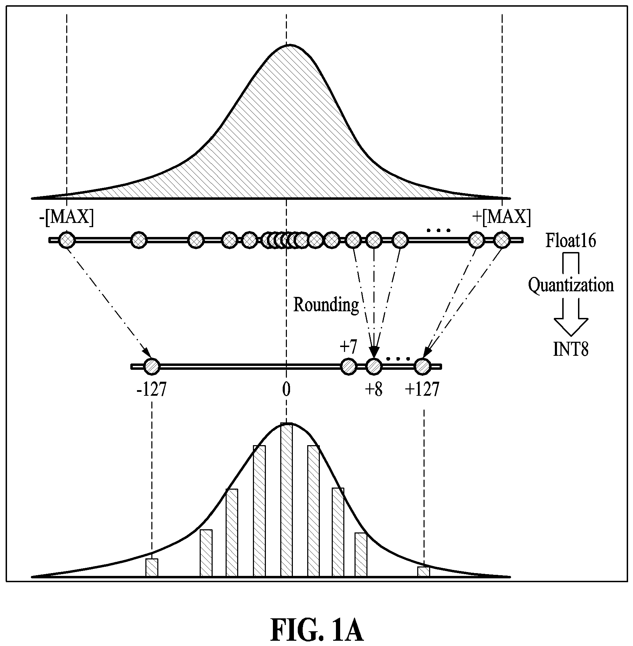

FIG. 1A is a diagram illustrating a quantization method according to one or more embodiments.

Image restoration may be a technique of outputting an enhanced image from a degraded input image (e.g., due to noise, hand-shake, and the like). In an image obtained in a low-light environment, most pixels may be distributed at a low value and conversely, in an image obtained in a high-light environment, most pixels may be distributed at a high value. An image restoration method according to one or more embodiments may be a method of quantizing a deep learning model for image restoration by using correction (e.g., gamma correction) in various light environments, may be used for all products equipped with a camera, and may be adaptively applicable to each imaging environment, such as low light and high light.

In a typical mobile or embedded environment, because of a limitation (such as a memory, performance, and/or a storage space), inference using deep learning may be difficult. To solve this, a quantization process of decreasing parameters, which are expressed by floating point numbers, to a specific bit number may be used. The deep learning model may include a weight and an activation output as parameters, and the weight and the activation output may be represented by high precision (e.g., 16-bit floating point (hereinafter, referred to as "FP16")) to increase the accuracy of the model. However, in an environment with a limited resource, the typical model representing all weights and activation outputs by high precision may be difficult to be used for inference. Quantization of the deep learning model may be reducing the size of the model by reducing the number of bits used for representation of the weight and the activation output.

Referring to FIG. 1A, quantization may be a process of mapping values represented by high precision (e.g., FP16) in a specific range to low precision values (e.g., 8-bit integer (hereinafter, referred to as INT8), and this may be mathematically expressed as Equation 1 shown below, for example.

Equation 1:

$$X_{int8} = \left[\frac{X_{FP16}}{\Delta}\right], \quad \Delta = \frac{\max(|X|)}{2^{N-1} - 1}$$

In a typical process of mapping values in a specific range to lower precision values, the performance difference between an original model and a quantized model may occur, and this may lead to qualitative and quantitative image quality differences in an image restoration process.

In contrast, an image restoration method according to one or more embodiments may mitigate image quality degradation that occurs in quantization of the deep learning model for image restoration, and furthermore, may adaptively perform image restoration depending on an imaging environment.

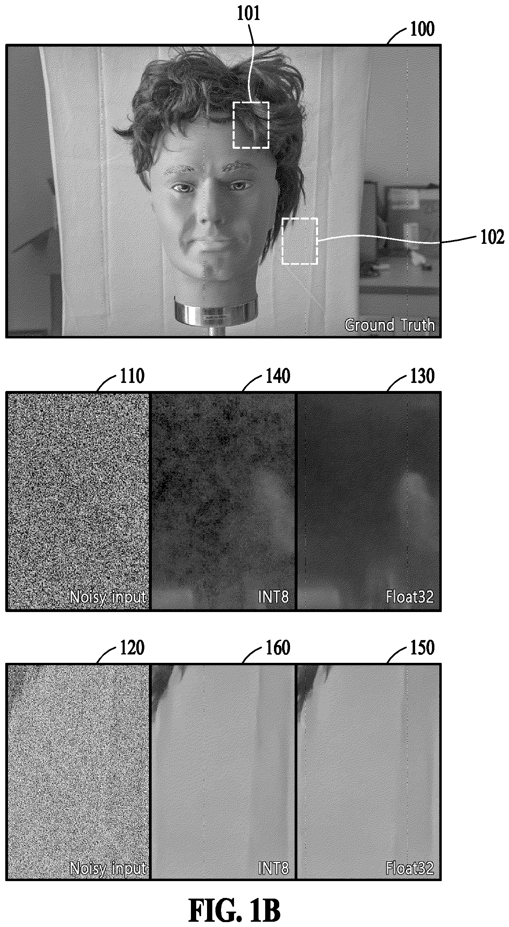

FIG. 1B is a diagram illustrating a problem that occurs when quantizing an image restoration deep learning model according to a typical technique.

The deep learning model according to one or more embodiments may be an image restoration model. For example, the deep learning model may include a denoising model, a deblurring model, a demosaic model, a high dynamic range (HDR) model, a super resolution model, and/or a combination thereof. When training a deep learning model for quantization for image restoration, typical techniques may not perform a special operation on an input image and may use the input image without modification. In other words, the typical techniques may not solve a quantization problem according to an illumination environment (e.g., a low-light environment). For example, most pixels constituting an image obtained in a low-light environment may be distributed at low pixel values. In general, when an image obtained in a low-light environment has a low signal-to-noise ratio (SNR), strong noise may be inserted into the image and the image quality may be significantly poor compared to an image obtained in a normal-light environment. The typical quantization may be a process of matching values of an interval in the same range to one low precision value (e.g., an integer value), and when quantizing an image obtained in the low-light environment, most dark pixel values may be converted into the same precision value (e.g., an integer value). In other words, although significantly more pixels exist than relatively bright pixels, fewer bits may be allocated thereto.

Referring to FIG. 1B, a first input image 110 may be an input image corresponding to a first area 101 of a ground truth (GT) image 100 and a second input image 120 may be an input image corresponding to a second area 102 of the GT image 100. The first input image 110 may be a relatively dark area to which strong noise is inserted compared to the second input image 120.

A first output image 130 may be an image obtained by inputting the first input image 110 to an image restoration model without quantization and a first quantized result image 140 may be an image obtained by inputting the first input image 110 to a quantized image restoration model.

A second output image 150 may be an image obtained by inputting the second input image 120 to the image restoration model without quantization and a second quantized result image 160 may be an image obtained by inputting the second input image 120 to the quantized image restoration model.

In comparison with the first quantized result image 140 and the second quantized result image 160, the image degradation of the first quantized result image 140 may be significant compared to an existing model result. However, unlike the example described above, the image degradation of the second quantized result image 160 in a relatively bright area may not be significant compared to the second output image 150. In other words, the image quality degradation due to quantization may be more noticeable in a dark area with a low pixel value.

As described above, a quantization error may occur while allocating a relatively small number of bits to low pixel values in which many pixels are distributed. Conversely, when a small number of pixels are distributed at high pixel values, the image quality degradation may be insignificant although the same number of bit as the low pixel value is allocated. However, typical image restoration deep learning models may not perform appropriate preprocessing based on a pixel distribution of an image for quantization and this may lead to an image degradation event after quantization. In contrast, based on an environmental characteristic of low light, an image restoration method of one or more embodiments may allocate more bits to a dark area and an area with a low pixel value.

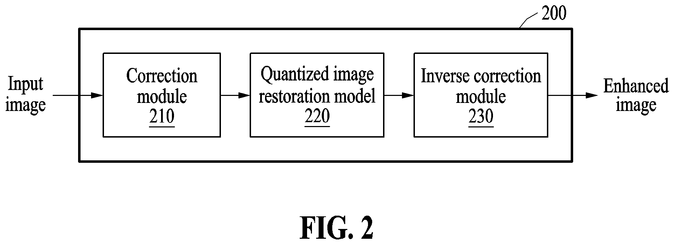

FIG. 2 is diagram illustrating an image restoration method according to one or more embodiments.

Referring to FIG. 2, an image restoration device 200 may include a correction module 210, a quantized image restoration model 220, and an inverse correction module 230. The image restoration device 200 according to one or more embodiments may be implemented in a mobile device, an embedded device (a robot), semiconductor measurement equipment, and/or an autonomous driving vehicle. The mobile device may be implemented as a smartphone, a tablet PC, a laptop computer, a mobile phone, a mobile internet device (MID), a personal digital assistant (PDA), an enterprise digital assistant (EDA), a digital still camera, a digital video camera, a portable multimedia player (PMP), a personal navigation device or portable navigation device (PND), a handheld game console, an e-book, and/or a smart device. The smart device may be implemented as a smartwatch, a smart band, and/or a smart ring.

Hereinafter, the term "module" may be a component including hardware (e.g., hardware implementing software and/or firmware). The term "module" may interchangeably be used with other terms, for example, "component" or "circuit." The "module" may be a minimum unit of an integrally formed component or part thereof. The "module" may be a minimum unit for performing one or more functions or part thereof. The "module" may be implemented mechanically or electronically. For example, the "module" may include any one or any combination of an application-specific integrated circuit (ASIC) chip, a field-programmable gate array (FPGA), and/or a programmable-logic device that performs known operations or operations to be developed.

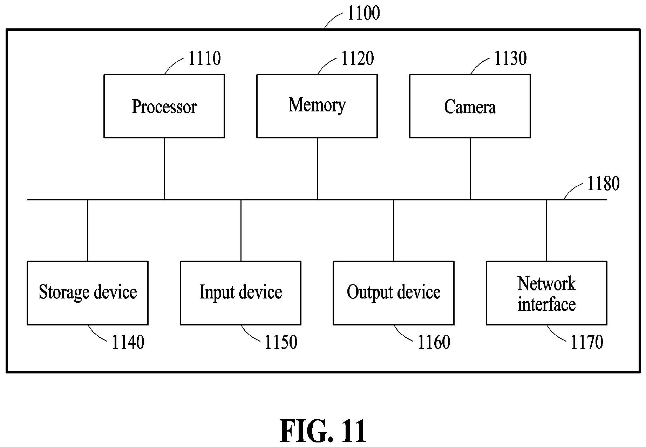

An input image according to one or more embodiments may include a color filter array raw image, an intermediate image, and/or a final image (e.g., a red, green, and blue (RGB) image) of an image signal processor (ISP), and/or a feature map of a deep learning model. For example, the image restoration device 200 according to one or more embodiments may obtain an input image from an imaging system (e.g., a camera 1130 of FIG. 11). The image restoration device 200 may include an imaging system or may exist separately from the imaging system. The imaging system may include a lens, a color filter array (CFA), an image sensor, and an ISP. Light may pass through the lens and the CFA and may be sensed by the image sensor, and the image sensor may generate a CFA raw image using the received light. The image sensor may convert light into an electrical signal using a light-receiving element, and in this case, light may be received by specifying the intensity of visible light of a specific wavelength through the CFA to obtain the intensity of the light as well as color information, and through this, recognizable color conversion may be enabled by identifying the intensity of light at a corresponding position. The ISP may generate a sampled input signal by the CFA as an RGB image.

The correction module 210 according to one or more embodiments may generate a correction image by correcting an input image based on a correction parameter that corrects a pixel value distribution of the input image. The correction module 210 may generate a correction image that is more appropriate for an input to the image restoration model by correcting an input image based on the correction parameter that corrects a pixel value distribution of the input image. For example, as described above, when pixel values of an image obtained in a specific illuminance environment (e.g., a low-light environment) are distributed in a shape leaning to one side, the correction module 210 may apply non-uniform quantization by moving the distribution of pixel values of the input image based on the correction parameter.

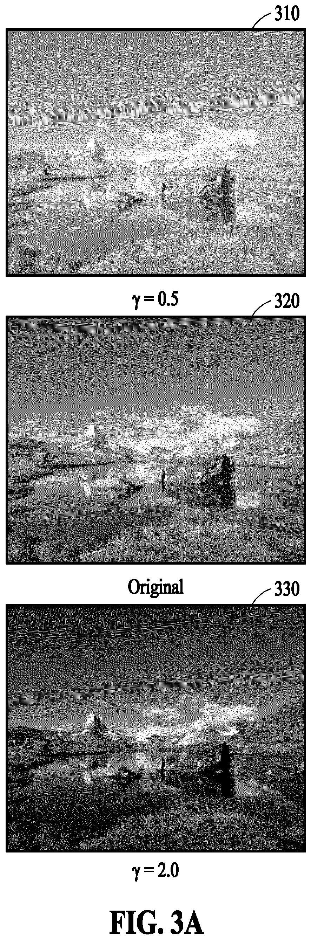

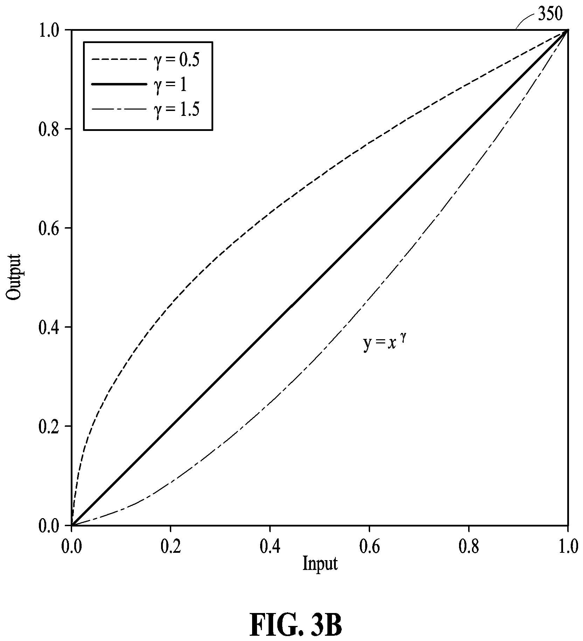

For example, the correction module 210 may generate a correction image by correcting the input image with a first gamma correction value. The correction module 210 may generate a correction image by performing an operation (e.g., an exponentiation operation) on the input image with a pre-determined gamma correction value. An example of the gamma correction according to one or more embodiments is further described with reference to FIGS. 3A and 3B below. Hereinafter, for ease of description, the description is provided based on an example of using a correction parameter as a gamma correction value. However, the correction parameter is not limited to the gamma correction value, and the correction parameter may include all types of parameters, which are able to correct a brightness (pixel value) distribution per pixel of an input image.

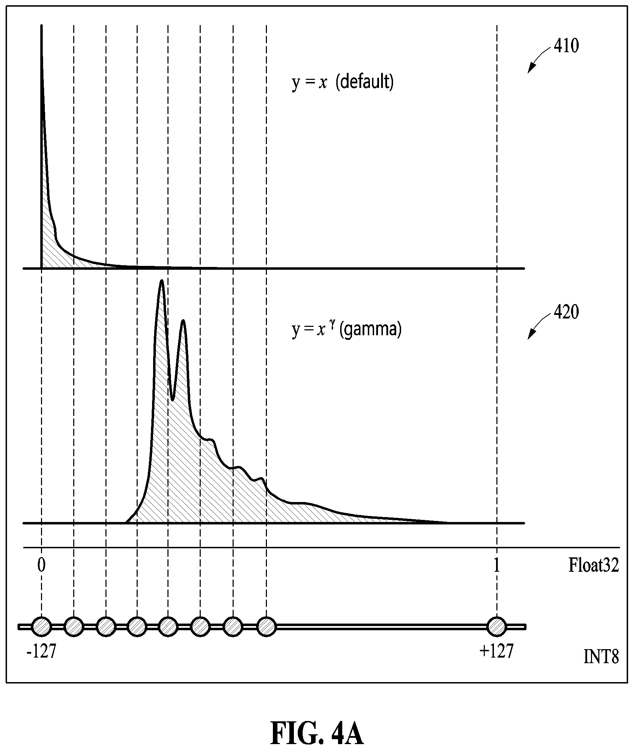

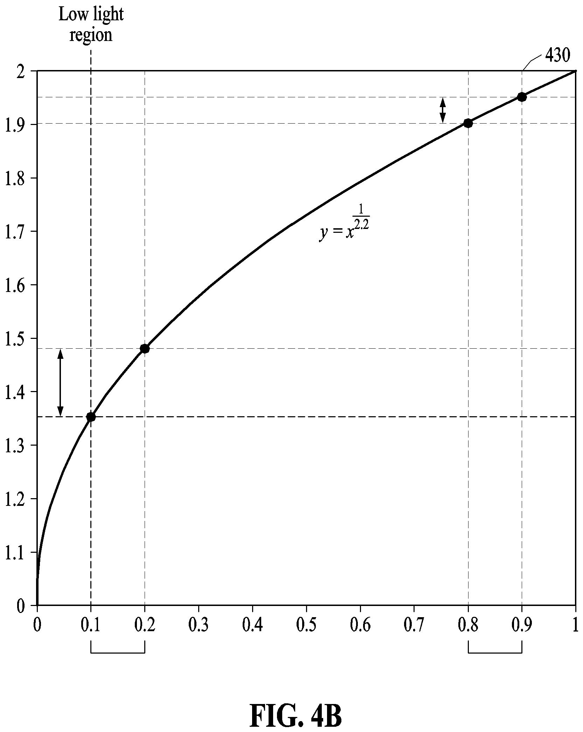

The quantized image restoration model 220 according to one or more embodiments may be a deep learning model that generates an output image by receiving a correction image. The quantized image restoration model 220 may include any or all deep learning models trained to perform image restoration and may be a model in which quantization is completed. The quantized image restoration model 220 may be a model to which quantization is applied using a deep learning model training method by considering quantization (hereinafter, also referred to as a quantization aware training (QAT) method). In the QAT method, an optimal scale may be pre-trained during the training in conjunction with an actual task loss. Alternatively, the quantized image restoration model 220 may be a model to which quantization is applied using a post training quantization (PTQ) method that performs quantization after training is completed at full precision. An example of a detailed operation of the quantized image restoration model 220 according to one or more embodiments is further described with reference to FIGS. 4A and 4B.

The inverse correction module 230 according to one or more embodiments may generate an enhanced image by inversely correcting an output image based on an inverse correction parameter. When the quantized image restoration model 220 receives the correction image as an input, the output image may also be in a quantization parameter domain. Accordingly, to obtain an enhanced image corresponding to an input image domain again, the inverse correction module 230 may inversely correct the output image based on the inverse correction parameter.

For example, the inverse correction module 230 may generate an enhanced image by correcting the output image with a second gamma correction value. The inverse correction module 230 may generate the enhanced image through an exponentiation operation by applying the second gamma correction value corresponding to the first gamma correction value to the output image..

FIGS. 3A and 3B are diagrams illustrating gamma correction according to one or more embodiments. The description provided with reference to FIG. 2 may be identically applicable to FIGS. 3A and 3B.

Human vision may nonlinearly respond to brightness according to Weber's law. Due to this, for example, when brightness of light is linearly recorded within a limited information representation amount (e.g., a bit depth), such as 8 bits per channel, when the brightness changes in a dark area where human eye sensitively responds, an event (posterization) in which the change may not be smooth and may seem to be discontinued may occur. Accordingly, a dark portion may need to be recorded in more detail by nonlinearly encoding the input image to show optimal image quality within the limitation of a representation amount of given information. The gamma correction may refer to nonlinear correction of an intensity signal of light by using a nonlinear transfer function to represent that human vision differently responds to a change in brightness. The gamma correction may be referred to as gamma encoding.

Referring to FIG. 3A, a first correction image 310 may be an image corrected by applying a gamma value 0.5 to an original image 320 and a second correction image 330 may be an image corrected by applying a gamma value 2.0 to the original image 320.

Referring to FIG. 3B, a graph 350 may be a nonlinear graph obtained by gamma correction. Referring to the graph 350, when a gamma value increases greater than 1, a curve may be downwardly convex and when the gamma value decreases less than 1, the curve may be upwardly convex.

FIG. 4A is a diagram illustrating a change in an input distribution according to gamma correction and a change in the number of allocated bits when quantizing according to one or more embodiments. The description provided with reference to FIGS. 2 to 3B may identically applicable to FIG. 4A.

An image restoration method according to one or more embodiments may minimize image quality degradation by using a gamma correction method when quantizing an image restoration model.

In a pixel value distribution 410 of an input image obtained in a low-light environment, most pixel values may be distributed around at a black-level and may lean to one side (e.g., may be predominantly low pixel values). Typically, when the input image ($y = x$) is normalized, the pixel values may be distributed in the pixel value distribution 410 in a range of 0 to 1 and when applying a gamma correction value $\gamma$ ($0 < \gamma < 1$) to the pixel values, a pixel value distribution 420 of a correction image may be $y = x^\gamma$. Compared to a value before the gamma correction is applied to the pixel values, when $\gamma$ having a range of ($0 < \gamma < 1$) is applied to the correction image, pixel values may relatively increase ($x^\gamma > x$), and thus, the pixel value distribution 410 of the input image leaning to one side may move to the other side in the pixel value distribution 420 (e.g., the pixel values may increase and the difference between the pixel values may increase).

FIG. 4B is a non-linear graph obtained through gamma correction when a gamma value is $\frac{1}{2.2}$ according to one or more embodiments. The description provided with reference to FIGS. 2 to 4A may identically apply to FIG. 4B.

Referring to FIG. 4B, a graph 430 may be a nonlinear graph obtained by gamma correction when a gamma value is $\frac{1}{2.2}$. Before the gamma correction, since the graph may have a linearity of $y = x$, the difference between pixel values 0.2 and 0.1 may be the same as the difference between pixel values 0.9 and 0.8. On the other hand, referring to the graph 430, through the gamma correction, the difference between pixel values 0.2 and 0.1 may be greater than the difference between pixel values 0.9 and 0.8. In other words, through the gamma correction according to a gamma correction value $\gamma$ ($0 < \gamma < 1$), the difference between low pixel values may become greater than the difference between relatively high pixel values. For example, the image restoration method according to one or more embodiments may increase a pixel value difference between pixels values when the pixel values are less than or equal to a threshold value determined by the gamma value. As another example, the image restoration method according to one or more embodiments may generate the correction image such that a pixel value difference between pixels values increases as the pixel values decrease. For example, the image restoration method according to one or more embodiments may generate the correction image by increasing a difference between low pixel values of pixels of an input image and decreasing a difference between high value pixels of the pixels of the input image.

When the difference between low pixel values becomes greater than the difference between high pixel values through the gamma correction, when allocating a bit for quantization, more bits may be allocated to low pixel values of the correction image 420 compared to the input image 410 on which the gamma correction is not performed. As a result, the image restoration method according to one or more embodiments may minimize degradation of image quality compared to before quantization by using a gamma correction value that is appropriate for a low-light environment when quantizing.

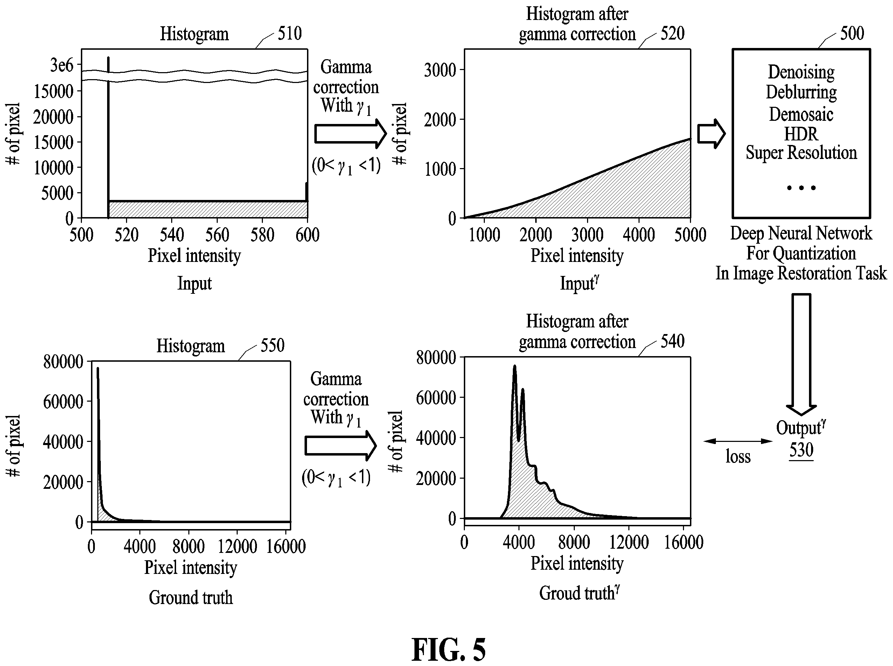

FIG. 5 is a diagram illustrating a method of training an image restoration model, according to one or more embodiments. The description provided with reference to FIGS. 2 to 4B may identically apply to FIG. 5.

Referring to FIG. 5, an image restoration model 500 may be trained based on an input image 510 for training and a GT image 550 corresponding to the input image 510. As described above, the image restoration model 500 may include a denoising model, a deblurring model, a demosaic model, an HDR model, a super resolution model, and/or a combination thereof.

A correction image 520 obtained by applying gamma correction to the input image 510 may be an input to the image restoration model 500. The image restoration model 500 may generate an output image 530 by receiving the correction image 520. When the output image 530 is in a gamma domain, the output image 530 may not be directly compared with the GT image 550. Accordingly, the image restoration model 500 may be trained based on the difference between the output image 530 and an inverse correction image 540 obtained by applying inverse gamma correction on the GT image 550.

The image restoration model 500 may be trained to minimize the difference between the inverse correction image 540 and the output image 530. For a loss used for training, various types of losses (e.g., L1, a mean squared error, and the like) may be applicable. A gamma correction value used to generate the correction image 520 may be the same as a gamma correction value used to generate the inverse correction image 540.

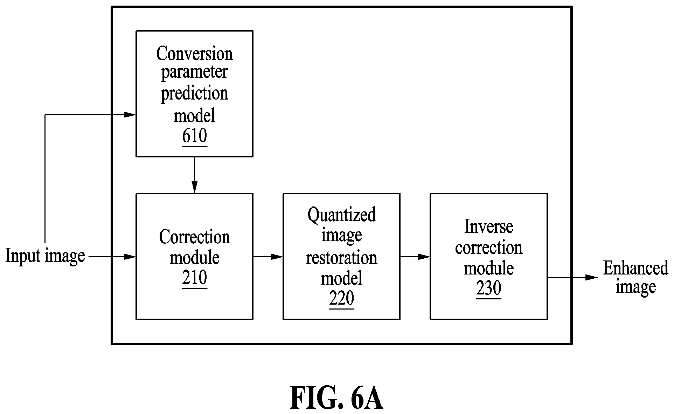

FIGS. 6A to 6C are diagrams illustrating a method of determining a correction parameter, according to one or more embodiments. The description provided with reference to FIGS. 2 to 5 may be identically applicable to FIGS. 6A to 6C.

Referring to FIG. 6A, an image restoration device according to one or more embodiments may include the correction module 210, the quantized image restoration model 220, the inverse correction module 230, and a correction parameter prediction model 610.

The image restoration device according to one or more embodiments may not use one fixed gamma correction value for all input images but may determine an optimal gamma value for each input image using the correction parameter prediction model 610.

The correction parameter prediction model 610 may be trained together at once by end-to-end with the quantized image restoration model 220 using a supervised learning-based or unsupervised-learning based auxiliary deep learning model. The correction parameter prediction model 610 may operate with the quantized image restoration model 220 in parallel in a multiprocessor. Alternatively, the correction parameter prediction model 610 may be implemented based on matching methods, such as histogram equalization (HE) as well as deep learning, and furthermore, may be implemented based on an arbitrary machine learning-based model (e.g., support vector machine).

Furthermore, the correction parameter prediction model 610 may use a different gamma correction value for each input image and may also differently determine a gamma correction value for each patch or channel in one input image. For example, an input image may be divided into a plurality of patches based on pixel brightness, and the correction parameter prediction model 610 may determine an appropriate gamma correction value to a corresponding patch. Alternatively, when an input image is an RGB image, the correction parameter prediction model 610 may determine gamma correction values respectively corresponding to R, G, and B.

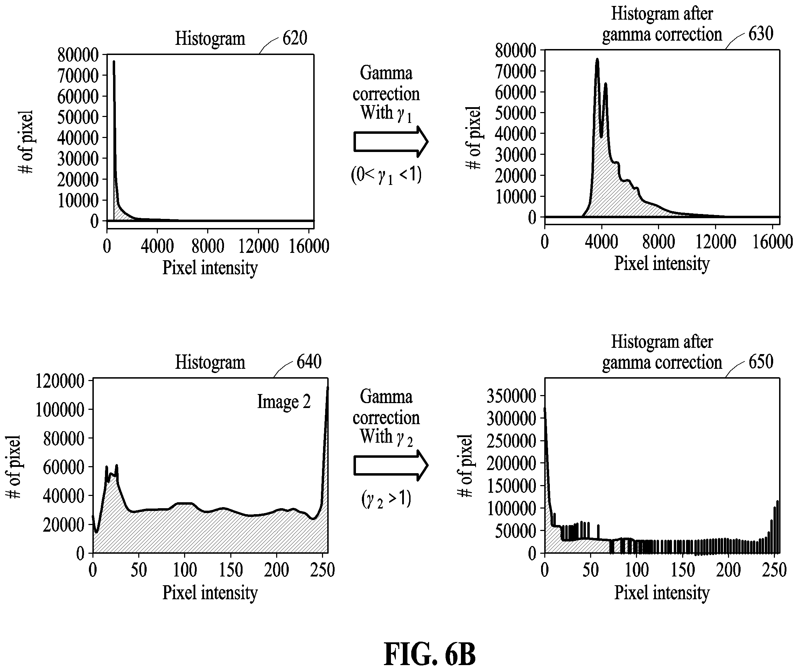

For example, referring to FIG. 6B, the correction parameter prediction model 610 may generate a first correction image 630 by applying a $\gamma_1$ value between 0 and 1 to a first input image 620 and may generate a second correction image 650 by applying a $\gamma_2$ value that is greater than 1 to a second input image 640.

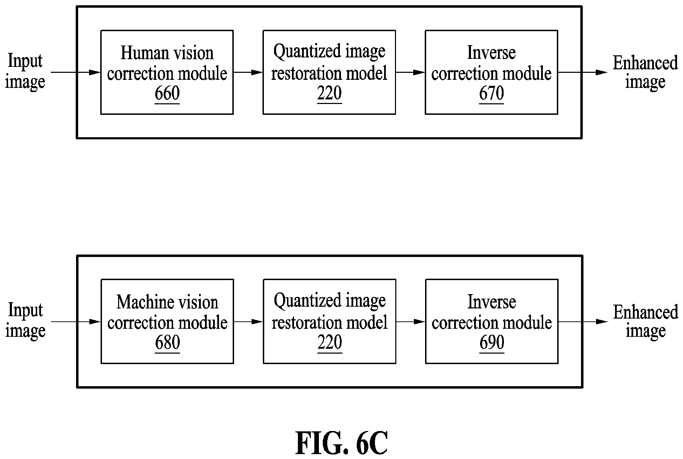

In addition, referring to FIG. 6C, a correction parameter may vary depending on a specific task target. The task target according to one or more embodiments may be a target to which an enhanced image is used, and for example, when an enhanced image that is appropriate for the human eye is required, the task target may be referred to as human vision and when an enhanced image that is appropriate for an input to a machine rather than a human is required, the task target may be referred to as machine vision.

For human vision, the image restoration device may include a gamma correction module for human vision 660 and an inverse correction module 670 corresponding to the gamma correction module for human vision 660. Similarly, for machine vision, the image restoration device may include a gamma correction module for machine vision 680 and an inverse correction module 690 corresponding to the gamma correction module for machine vision 680.

Even when the gamma correction module for human vision 660 and the gamma correction module for machine vision 680 receive the same input image, the gamma correction module for human vision 660 and the gamma correction module for machine vision 680 may generate different correction images corrected by different gamma correction values. This is because human vision and machine vision may require different values as optimal gamma correction values. The human vision and the machine vision may be one example of the task target, and the task target is not limited the example described above.

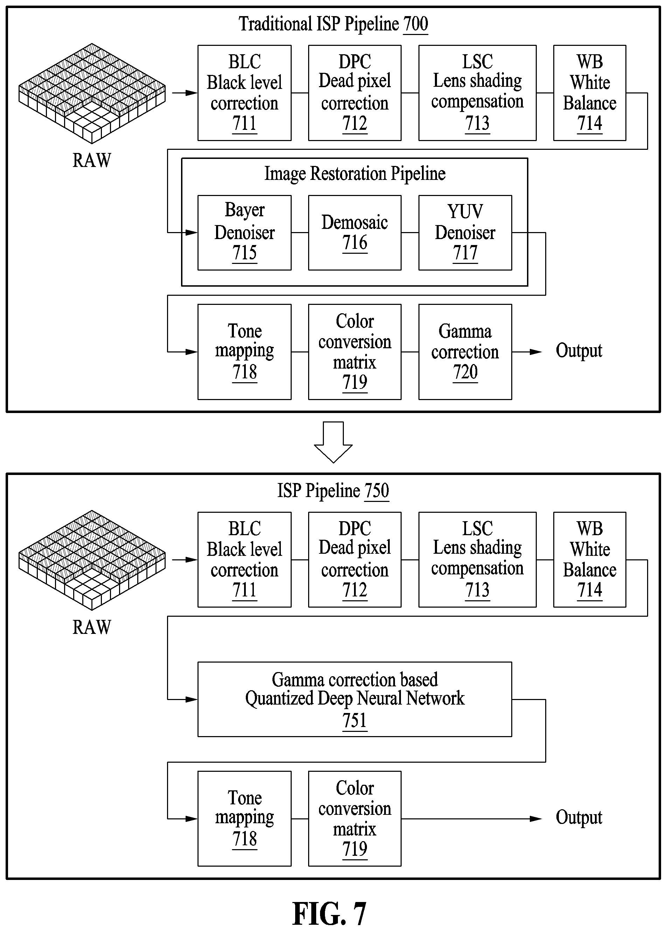

FIG. 7 is a diagram illustrating an image signal processing method according to one or more embodiments.

Referring to FIG. 7, a typical image signal processing method 700 may generate an enhanced image by performing black level correction (BLC) 711, dead pixel correction (DPC) 712, lens shading compensation (LSC) 713, white balance (WB) 714, Bayer denoiser 715, demosaic 716, luma, blue projection, and red projection (YUV) denoiser 717, tone mapping 718, a color conversion matrix 719, and gamma correction 720 on an image with a CFA.

On the other hand, an image signal processing method 750 according to one or more embodiments may generate an enhanced image by performing BLC 711, DPC 712, LSC 713, WB 714, a quantized image restoration model(e.g., Gamma correction based Quantized Deep Neural Network 751), tone mapping 718, and a color conversion matrix 719 on an image with a CFA.

In other words, the image signal processing method 750 according to one or more embodiments may perform operations of Bayer denoiser 715, demosaic 716, and YUV denoiser 717 through the quantized image restoration model together at once. Furthermore, the image restoration model according to one or more embodiments may omit the gamma correction 720 performed in the typical image signal processing method 700 because a correction image to which a gamma correction value is applied is input as an input image. In addition, in the image signal processing method 750 according to one or more embodiments, when a gamma correction removal operation is additionally omitted from a result image that restores an image, an operation burden may decrease in an overall process of image signal processing.

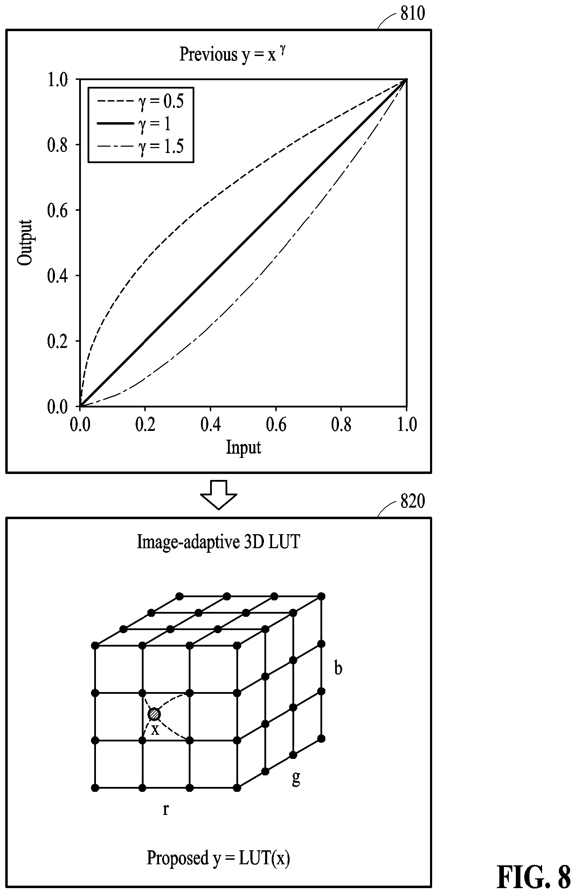

FIG. 8 is diagram illustrating a look-up table (LUT) that performs optimal correction for each image according to one or more embodiments.

Referring to FIG. 8, in a diagram 810, an operation ($y = x^\gamma$) for correcting an input image with a gamma correction value to generate a correction image corresponding to the input image may be required. However, when generating a correction image corresponding to an input image, the image restoration device according to one or more embodiments may use an LUT instead of an operation ($y = x^\gamma$) that corrects the input image with a first gamma correction value.

For example, the image restoration device may generate values required for the operation ($y = x^\gamma$) that corrects the input image with a gamma correction value in the form of an LUT in advance. Referring to a diagram 820, the image restoration device may generate a correction image by performing an operation ($y=LUT(x)$) that corrects an input image with the first gamma correction value using an LUT.

The LUT according to one or more embodiments may be generated based on a deep learning model. For example, the image restoration device may generate an LUT corresponding to an input image by inputting the input image to an LUT generative model based on deep learning. The LUT generative model according to one or more embodiments may be trained to perform optimal correction on each input image. The LUT generative model may be trained end-to-end with the image restoration model.

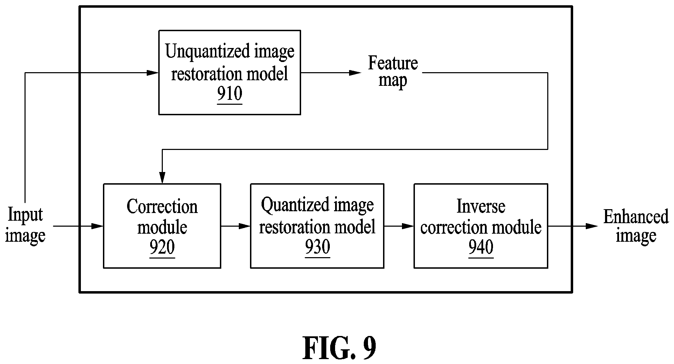

FIG. 9 is a diagram illustrating an example of using an intermediate feature map as an input image of a correction module according to one or more embodiments.

Referring to FIG. 9, an image restoration device according to one or more embodiments may include an unquantized image restoration model 910, a correction module 920, a quantized image restoration model 930, and an inverse correction module 940. In one large image restoration model, a portion that desires quantization may be referred to as the quantized image restoration model 930 and in input and output ends of the quantized image restoration model 930, the correction module 920 and the inverse correction module 940 may be applied.

The image restoration device according to one or more embodiments may obtain a feature map by inputting an input image to the unquantized image restoration model 910. When the feature map, which is an output of the image restoration model 910, is not the final result from the perspective of the entire model, the feature map may be referred to as an intermediate feature map. The correction module 920 may receive the feature map as an input and may generate a correction image by correcting the feature map. Since the descriptions of the correction module 210, the quantized image restoration model 220, and the inverse correction module 230 described with reference to FIG. 2 may be identically applicable to operations of the correction module 920, the quantized image restoration model 930, the inverse correction module 940, the repeated description thereof is omitted.

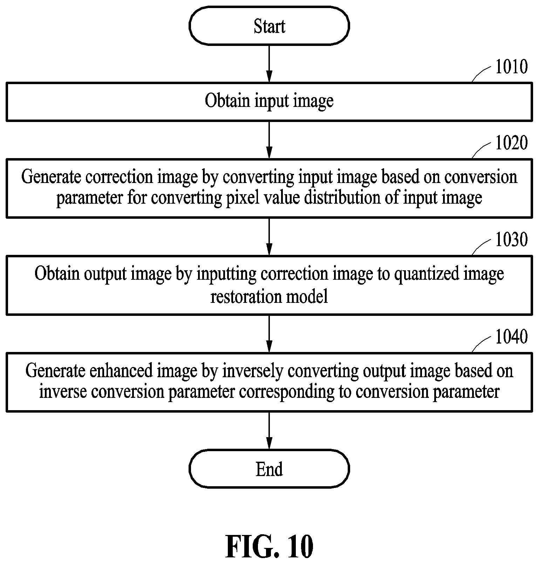

FIG. 10 is a flowchart illustrating an image restoration method according to one or more embodiments.

For ease of description, operations 1010 to 1040 are described as being performed using the image restoration device 200 shown in FIG. 2. However, operations 1010 to 1040 may be performed by another suitable electronic device in any suitable system.

Furthermore, the operations of FIG. 10 may be performed in the shown order and manner. However, the order of some operations may be changed, or some operations may be omitted, without departing from the scope of the shown example. The operations shown in FIG. 10 may be performed in parallel or simultaneously.

In operation 1010, an image restoration device may obtain an input image. The input image may include at least one of a CFA raw image, an output image, and an intermediate image of an ISP.

In operation 1020, the image restoration device may generate a correction image by correcting the input image based on a conversion parameter that corrects a pixel value distribution of the input image. The image restoration device may generate a correction image by correcting the input image with a first gamma correction value. The image restoration device may determine a conversion parameter corresponding to the input image. The image restoration device may determine the conversion parameter based on the illuminance of the input image. The image restoration device may determine the conversion parameter based on a specific task target to which the image restoration method is used.

The image restoration device may obtain an LUT and may generate a correction image corresponding to the input image based on the LUT. The image restoration device may generate an LUT corresponding to the input image by inputting the input image to an LUT generative model.

In operation 1030, the image restoration device may obtain an output image by inputting the correction image to a quantized image restoration model.

In operation 1040, the image restoration device may generate an enhanced image by inversely correcting the output image based on an inverse conversion parameter corresponding to the conversion parameter. The image restoration device may generate the enhanced image by inversely correcting the output image with a second gamma correction value. The first gamma correction value and the second gamma correction value may have a reciprocal relationship.

FIG. 11 illustrates an example of a configuration of an electronic device according to one or more example embodiments.

Referring to FIG. 11, an electronic device 1100 may include a processor 1110 (e.g., one or more processors), a memory 1120 (e.g., one or more memories), a camera 1130, a storage device 1140, an input device 1150, an output device 1160, and a network interface 1170, and these components may communicate with one another through a communication bus 1180. For example, the electronic device 1100 may be, or implemented as at least a part of, a mobile device such as a mobile phone, a smart phone, a personal digital assistant (PDA), a netbook, a tablet computer or a laptop computer, a wearable device such as a smart watch, a smart band or smart glasses, or a computing device such as a desktop or a server. The electronic device 1100 may be or include the image restoration device 200 of FIG. 2.

The processor 1110 may execute instructions and functions in the electronic device 1100. For example, the processor 1110 may process the instructions stored in the memory 1120 or the storage device 1140. The processor 1110 may perform one or more of the operations or methods described above with reference to FIGS. 1 to 10. The memory 1120 may include a non-transitory computer-readable storage medium or a non-transitory computer-readable storage device. The memory 1120 may store instructions that are to be executed by the processor 1110, and may also store information associated with software and/or applications when the software and/or applications are being executed by the electronic device 1100. In an example, the memory 1120 may be or include a non-transitory computer-readable storage medium storing instructions that, when executed by the processor 1110, configure the processor 1110 to perform any one, any combination, or all of operations and methods described herein with reference to FIGS. 1-10. In an example, the processor 1110 may include the correction module 210, the inverse correction module 230, the gamma correction module for human vision 660, the inverse correction module 670, the gamma correction module for machine vision 680, the inverse correction module 690, the correction module 920, and/or the inverse correction module 940. In an example, the processor 1110 may implement the quantized image restoration model 220, the image restoration model 500, the conversion parameter prediction model 610, the image signal processing method 750, the unquantized image restoration model 910, and/or the quantized image restoration model 930.

The camera 1130 may capture a photo and/or a video. The camera 1130 may include a lens, a CFA, an image sensor, and an ISP. The storage device 1140 may include a non-transitory computer-readable storage medium or a non-transitory computer-readable storage device. The storage device 1140 may store a greater amount of information than the memory 1120 and store the information for a long period of time. For example, the storage device 1140 may include a magnetic hard disk, an optical disk, a flash memory, a floppy disk, or other non-volatile memories.

The input device 1150 may receive an input from a user through a traditional input scheme using a keyboard and a mouse, and through a new input scheme such as a touch input, a voice input and an image input. The input device 1150 may include, for example, a keyboard, a mouse, a touchscreen, a microphone, and other devices that may detect an input from a user and transmit the detected input to the electronic device 1100. The output device 1160 may provide an output of the electronic device 1100 to a user through a visual, auditory, or tactile channel. The output device 1160 may include, for example, a display, a touch screen, a speaker, a vibration generator, or any other device that provides an output to a user. For example, the output device 1160 may provide an output image generated by the processor 1110 (e.g., any of the enhanced images discussed above with reference to FIGS. 1-10) through the display. The network interface 1170 may communicate with an external device through a wired or wireless network.

The image restoration devices, correction modules, inverse correction modules, gamma correction modules for human vision, gamma correction modules for machine vision, correction modules, inverse correction modules, electronic devices, processors, memories, cameras, storage devices, input devices, output devices, network interfaces, communication buses, image restoration device 200, correction module 210, inverse correction module 230, gamma correction module for human vision 660, inverse correction module 670, gamma correction module for machine vision 680, inverse correction module 690, correction module 920, inverse correction module 940, electronic device 1100, processor 1110, memory 1120, camera 1130, storage device 1140, input device 1150, output device 1160, network interface 1170, and communication bus 1180 described herein, including descriptions with respect to respect to FIGS. 1-11, are implemented by or representative of hardware components. As described above, or in addition to the descriptions above, examples of hardware components that may be used to perform the operations described in this application where appropriate include controllers, sensors, generators, drivers, memories, comparators, arithmetic logic units, adders, subtractors, multipliers, dividers, integrators, and any other electronic components configured to perform the operations described in this application. In other examples, one or more of the hardware components that perform the operations described in this application are implemented by computing hardware, for example, by one or more processors or computers. A processor or computer may be implemented by one or more processing elements, such as an array of logic gates, a controller and an arithmetic logic unit, a digital signal processor, a microcomputer, a programmable logic controller, a field-programmable gate array, a programmable logic array, a microprocessor, or any other device or combination of devices that is configured to respond to and execute instructions in a defined manner to achieve a desired result. In one example, a processor or computer includes, or is connected to, one or more memories storing instructions or software that are executed by the processor or computer. Hardware components implemented by a processor or computer may execute instructions or software, such as an operating system (OS) and one or more software applications that run on the OS, to perform the operations described in this application. The hardware components may also access, manipulate, process, create, and store data in response to execution of the instructions or software. For simplicity, the singular term "processor" or "computer" may be used in the description of the examples described in this application, but in other examples multiple processors or computers may be used, or a processor or computer may include multiple processing elements, or multiple types of processing elements, or both. For example, a single hardware component or two or more hardware components may be implemented by a single processor, or two or more processors, or a processor and a controller. One or more hardware components may be implemented by one or more processors, or a processor and a controller, and one or more other hardware components may be implemented by one or more other processors, or another processor and another controller. One or more processors, or a processor and a controller, may implement a single hardware component, or two or more hardware components. As described above, or in addition to the descriptions above, example hardware components may have any one or more of different processing configurations, examples of which include a single processor, independent processors, parallel processors, single-instruction single-data (SISD) multiprocessing, single-instruction multiple-data (SIMD) multiprocessing, multiple-instruction single-data (MISD) multiprocessing, and multiple-instruction multiple-data (MIMD) multiprocessing.

The methods illustrated in, and discussed with respect to, FIGS. 1-11 that perform the operations described in this application are performed by computing hardware, for example, by one or more processors or computers, implemented as described above implementing instructions (e.g., computer or processor/processing device readable instructions) or software to perform the operations described in this application that are performed by the methods. For example, a single operation or two or more operations may be performed by a single processor, or two or more processors, or a processor and a controller. One or more operations may be performed by one or more processors, or a processor and a controller, and one or more other operations may be performed by one or more other processors, or another processor and another controller. One or more processors, or a processor and a controller, may perform a single operation, or two or more operations.

Instructions or software to control computing hardware, for example, one or more processors or computers, to implement the hardware components and perform the methods as described above may be written as computer programs, code segments, instructions or any combination thereof, for individually or collectively instructing or configuring the one or more processors or computers to operate as a machine or special-purpose computer to perform the operations that are performed by the hardware components and the methods as described above. In one example, the instructions or software include machine code that is directly executed by the one or more processors or computers, such as machine code produced by a compiler. In another example, the instructions or software includes higher-level code that is executed by the one or more processors or computer using an interpreter. The instructions or software may be written using any programming language based on the block diagrams and the flow charts illustrated in the drawings and the corresponding descriptions herein, which disclose algorithms for performing the operations that are performed by the hardware components and the methods as described above.

The instructions or software to control computing hardware, for example, one or more processors or computers, to implement the hardware components and perform the methods as described above, and any associated data, data files, and data structures, may be recorded, stored, or fixed in or on one or more non-transitory computer-readable storage media, and thus, not a signal per se. As described above, or in addition to the descriptions above, examples of a non-transitory computer-readable storage medium include one or more of any of read-only memory (ROM), random-access programmable read only memory (PROM), electrically erasable programmable read-only memory (EEPROM), random-access memory (RAM), dynamic random access memory (DRAM), static random access memory (SRAM), flash memory, non-volatile memory, CD-ROMs, CD-Rs, CD+Rs, CD-RWs, CD+RWs, DVD-ROMs, DVD- Rs, DVD+Rs, DVD-RWs, DVD+RWs, DVD-RAMs, BD-ROMs, BD-Rs, BD-R LTHs, BD-REs, blue-ray or optical disk storage, hard disk drive (HDD), solid state drive (SSD), flash memory, a card type memory such as multimedia card micro or a card (for example, secure digital (SD) or extreme digital (XD)), magnetic tapes, floppy disks, magneto-optical data storage devices, optical data storage devices, hard disks, solid-state disks , and/or any other device that is configured to store the instructions or software and any associated data, data files, and data structures in a non-transitory manner and provide the instructions or software and any associated data, data files, and data structures to one or more processors or computers so that the one or more processors or computers can execute the instructions. In one example, the instructions or software and any associated data, data files, and data structures are distributed over network-coupled computer systems so that the instructions and software and any associated data, data files, and data structures are stored, accessed, and executed in a distributed fashion by the one or more processors or computers.

While this disclosure includes specific examples, it will be apparent after an understanding of the disclosure of this application that various changes in form and details may be made in these examples without departing from the scope of the claims. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components.

Therefore, in addition to the above and all drawing disclosures, the scope of the disclosure is also inclusive of the claims, i.e., all variations within the scope of the claims are to be construed as being included in the disclosure.

Further embodiments are described by the following clauses:

1. A processor-implemented method with image restoration, the method comprising:

obtaining an input image;
generating a correction image by converting the input image based on a conversion parameter that converts a pixel value distribution of the input image;
generating an output image by inputting the correction image to a quantized image restoration model; and
generating an enhanced image by inversely converting the output image based on an inverse conversion parameter corresponding to the conversion parameter.

2. The method of clause 1, wherein

the generating of the correction image comprises generating the correction image by converting the input image with a first gamma correction value, and
the generating of the enhanced image comprises generating the enhanced image by inversely converting the output image with a second gamma correction value.

3. The method of clause 2, wherein the first gamma correction value and the second gamma correction value have a reciprocal relationship.

4. The method of clause 1, wherein the generating of the correction image further comprises determining the conversion parameter corresponding to the input image.

5. The method of clause 1, wherein the generating of the correction image further comprises determining the conversion parameter based on illuminance of the input image.

6. The method of clause 1, wherein the generating of the correction image further comprises determining the conversion parameter based on a specific task target to which the method of image restoration is used.

7. The method of clause 1, wherein the input image comprises any one or any combination of any two or more of a color filter array (CFA) raw image, an output image, and an intermediate image of an image signal processor (ISP).

8. The method of clause 1, wherein the generating of the correction image comprises:

obtaining a look-up table (LUT); and
generating the correction image corresponding to the input image based on the LUT.

9. The method of clause 8, wherein the obtaining of the LUT comprises generating the LUT corresponding to the input image by inputting the input image to an LUT generative model.

10. A non-transitory computer-readable storage medium storing instructions that, when executed by one or more processors, configure the one or more processors to perform the method of clause 1.

11. An electronic device comprising:
one or more processors configured to:

obtain an input image,
generate a correction image by converting the input image based on a conversion parameter that converts a pixel value distribution of the input image,
generate an output image by inputting the correction image to a quantized image restoration model, and
generate an enhanced image by inversely converting the output image based on an inverse conversion parameter corresponding to the conversion parameter.

12. The electronic device of clause 11, wherein the one or more processors are further configured to:

for the generating of the correction image, generate the correction image by converting the input image with a first gamma correction value, and
for the generating of the enhanced image, generate the enhanced image by inversely converting the output image with a second gamma correction value.

13. The electronic device of clause 12, wherein the first gamma correction value and the second gamma correction value have a reciprocal relationship.

14. The electronic device of clause 11, wherein, for the generating of the correction image, the one or more processors are further configured to determine the conversion parameter corresponding to the input image.

15. The electronic device of clause 11, wherein, for the generating of the correction image, the one or more processors are further configured to determine the conversion parameter based on illuminance of the input image.

16. The electronic device of clause 11, wherein, for the generating of the correction image, the one or more processors are further configured to determine the conversion parameter based on a specific task target to which a method of image restoration is used.

17. The electronic device of clause 11, wherein the input image comprises any one or any combination of any two or more of a color filter array (CFA) raw image, an output image, and an intermediate image of an image signal processor (ISP).

18. The electronic device of clause 11, wherein, for the generating of the correction image, the one or more processors are further configured to:

obtain a look-up table (LUT), and
generate the correction image corresponding to the input image based on the LUT.

19. The electronic device of clause 18, wherein, for the obtaining of the LUT, the one or more processors are further configured to generate the LUT corresponding to the input image by inputting the input image to an LUT generative model.

20. A processor-implemented method with image restoration, the method comprising:

generating, using a conversion parameter, a correction image by modifying pixel values of an input image such that a difference between low pixel values is increased a difference between high pixel values is decreased;
generating an output image by inputting the correction image to a quantized image restoration model; and
generating an enhanced image by inversely converting the output image based on an inverse conversion parameter corresponding to the conversion parameter.

**Claims**

1. A processor-implemented method with image restoration, the method comprising:

obtaining an input image;
generating a correction image by correcting the input image based on a correction parameter that corrects a pixel value distribution of the input image;
generating an output image by inputting the correction image to a quantized image restoration model; and
generating an enhanced image by inversely correcting the output image based on an inverse correction parameter corresponding to the correction parameter.

**EP 4 579 579 A1**

2. The method of claim 1, wherein

the generating of the correction image comprises generating the correction image by correcting the input image with a first gamma correction value, and
the generating of the enhanced image comprises generating the enhanced image by inversely correcting the output image with a second gamma correction value; preferably, wherein the first gamma correction value and the second gamma correction value have a reciprocal relationship.

3. The method of claim 1 or 2, wherein the generating of the correction image further comprises determining the correction parameter corresponding to the input image.

4. The method according to any one of the previous claims, wherein the generating of the correction image further comprises determining the correction parameter based on illuminance of the input image and/or based on a specific task target to which the method of image restoration is used.

5. The method according to any one of the previous claims, wherein the input image comprises any one or any combination of any two or more of a color filter array (CFA) raw image, an output image, and an intermediate image of an image signal processor (ISP).

6. The method according to any one of the previous claims, wherein the generating of the correction image comprises:

obtaining a look-up table (LUT); and
generating the correction image corresponding to the input image based on the LUT, wherein preferably the obtaining of the LUT comprises generating the LUT corresponding to the input image by inputting the input image to an LUT generative model.

7. The method according to any of the previous claims, generating a correction image comprises modifying pixel values of an input image such that a difference between low pixel values is increased a difference between high pixel values is decreased.

8. A computer program comprising instructions which, when the program is executed by a computer, cause the computer to carry out the steps of the method according to any one of the previous method claims.

9. A non-transitory computer-readable storage medium storing instructions that, when executed by one or more processors, configure the one or more processors to perform the method according to any one of the previous method claims.

10. An electronic device comprising:
one or more processors configured to:

obtain an input image,
generate a correction image by correcting the input image based on a correction parameter that corrects a pixel value distribution of the input image,
generate an output image by inputting the correction image to a quantized image restoration model, and
generate an enhanced image by inversely correcting the output image based on an inverse correction parameter corresponding to the correction parameter.

11. The electronic device of claim 10, wherein the one or more processors are further configured to:

for the generating of the correction image, generate the correction image by correcting the input image with a first gamma correction value, and
for the generating of the enhanced image, generate the enhanced image by inversely correcting the output image with a second gamma correction value; preferably,
wherein the first gamma correction value and the second gamma correction value have a reciprocal relationship.

12. The electronic device of claim 10 or 11, wherein, for the generating of the correction image, the one or more processors are further configured to determine the correction parameter corresponding to the input image.

13. The electronic device according to any one of claims 10-12, wherein, for the generating of the correction image, the one or more processors are further configured to determine the correction parameter based on illuminance of the input image and/or based on a specific task target to which a method of image restoration is used.

14. The electronic device according to any one of claims 10-13, wherein the input image comprises any one or any combination of any two or more of a color filter array (CFA) raw image, an output image, and an intermediate image of an image signal processor (ISP).

15. The electronic device according to any one of claims 10-14, wherein, for the generating of the correction image, the one or more processors are further configured to:

obtain a look-up table (LUT), and
generate the correction image corresponding to the input image based on the LUT, wherein preferably, for the obtaining of the LUT, the one or more processors are further configured to generate the LUT corresponding to the input image by inputting the input image to an LUT generative model.

**FIG. 1A**

**FIG. 1B**

**FIG. 2**

γ = 0.5

Original

γ = 2.0

**FIG. 3A**

**FIG. 3B**

**FIG. 4A**

FIG. 4B

FIG. 5

Conversion
parameter
prediction
model
610

Input image

Correction
module
210

Quantized
image
restoration
model
220

Inverse
correction
module
230

Enhanced
image

# FIG. 6A

FIG. 6B

EP 4 579 579 A1

Input image → **Human vision correction module** <u>660</u> → **Quantized image restoration model** <u>220</u> → **Inverse correction module** <u>670</u> → Enhanced image

Input image → **Machine vision correction module** <u>680</u> → **Quantized image restoration model** <u>220</u> → **Inverse correction module** <u>690</u> → Enhanced image

## FIG. 6C

## Traditional ISP Pipeline 700

RAW

| BLC Black level correction 711 | DPC Dead pixel correction 712 | LSC Lens shading compensation 713 | WB White Balance 714 |

### Image Restoration Pipeline

| Bayer Denoiser 715 | Demosaic 716 | YUV Denoiser 717 |

| Tone mapping 718 | Color conversion matrix 719 | Gamma correction 720 | → Output

## ISP Pipeline 750

RAW

| BLC Black level correction 711 | DPC Dead pixel correction 712 | LSC Lens shading compensation 713 | WB White Balance 714 |

Gamma correction based Quantized Deep Neural Network 751

| Tone mapping 718 | Color conversion matrix 719 | → Output

## FIG. 7

810

Previous y = x $^{\gamma}$

820

Image-adaptive 3D LUT

Proposed y = LUT(x)

**FIG. 8**

Unquantized image
restoration model
910

Feature
map

Input
image

Correction
module
920

Quantized image
restoration model
930

Inverse
correction module
940

Enhanced
image

**FIG. 9**

Start

Obtain input image /1010

Generate correction image by converting input image based on conversion parameter for converting pixel value distribution of input image /1020

Obtain output image by inputting correction image to quantized image restoration model /1030

Generate enhanced image by inversely converting output image based on inverse conversion parameter corresponding to conversion parameter /1040

End

**FIG. 10**

/ 1100

/ 1110　　　　/ 1120　　　　/ 1130

| Processor | Memory | Camera |

/ 1180

| Storage device | Input device | Output device | Network interface |

1140　　　　1150　　　　1160　　　　1170

**FIG. 11**

Europäisches
Patentamt

European
Patent Office

Office européen
des brevets

**EUROPEAN SEARCH REPORT**

Application Number

EP 24 22 3355

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/224509 A1 (HUAWEI TECH CO LTD [CN]; FILIPPOV ALEXANDER NIKOLAEVICH [CN]) 23 November 2023 (2023-11-23) * paragraph [0030] - paragraph [00100] * * figures 1,2 * | 1-15 | INV. G06T5/70 G06T5/92 G06T5/94 |
| X | WO 2022/006556 A1 (BLINKAI TECH INC [US]) 6 January 2022 (2022-01-06) * paragraph [0058] - paragraph [0089] * * figures 1, 2, 3, 5 * | 1-15 | |
| X | WO 2022/027442 A1 (HUAWEI TECH CO LTD [CN]) 10 February 2022 (2022-02-10) * paragraph [0170] - paragraph [0215] * | 1-15 | |

**TECHNICAL FIELDS SEARCHED (IPC)**

G06T

The present search report has been drawn up for all claims

| Place of search | Date of completion of the search | Examiner |
|---|---|---|
| Munich | 27 March 2025 | Gitzenis, Savvas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 22 3355

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | | Publication date |
|---|---|---|---|---|
| WO 2023224509 A1 | 23-11-2023 | CN | 119213772 A | 27-12-2024 |
| | | EP | 4512083 A1 | 26-02-2025 |
| | | US | 2025080768 A1 | 06-03-2025 |
| | | WO | 2023224509 A1 | 23-11-2023 |
| WO 2022006556 A1 | 06-01-2022 | CN | 117916765 A | 19-04-2024 |
| | | EP | 4154171 A1 | 29-03-2023 |
| | | JP | 2023532228 A | 27-07-2023 |
| | | KR | 20230034302 A | 09-03-2023 |
| | | US | 2022004798 A1 | 06-01-2022 |
| | | WO | 2022006556 A1 | 06-01-2022 |
| WO 2022027442 A1 | 10-02-2022 | CN | 115699757 A | 03-02-2023 |
| | | WO | 2022027442 A1 | 10-02-2022 |

EPO FORM P0459

For more details about this annex : see Official Journal of the European Patent Office, No. 12/82